# EUROPEAN PATENT APPLICATION

(11) **EP 3 556 554 A1**
(43) Date of publication of application: **23.10.2019**
(21) Application number: 17880202.1
(22) Date of filing: 07.12.2017
(51) Int. Cl.: B32B 27/20, B29C 45/14, B32B 27/00

(54) **DECORATIVE FILM AND DECORATIVE MOLDED BODY**

(30) Priority: 16.12.2016 JP 2016244935
(71) Applicant: FUJIFILM Corporation, Tokyo 106-8620 (JP)
(72) Inventor: ARIDOMI, Takashi, Fujinomiya-shi Shizuoka 418-8666 (JP); KANNA, Shinichi, Fujinomiya-shi Shizuoka 418-8666 (JP)
(74) Representative: Jeffrey, Philip Michael
(86) International application number: PCT/JP2017/043997
(87) International publication number: WO 2018/110422

(57) **Abstract**

Provided are a decorative film including: a base film, a reflective layer which contains metal particles and a resin on one surface of the base film, and a colored layer which contains a colorant other than the metal particles on a surface of the reflective layer opposite to a side where the base film is provided; and a decorative molded body.

## Description

### BACKGROUND OF THE INVENTION

### 1. Field of the Invention

The present disclosure relates to a decorative film and a decorative molded body.

### 2. Description of the Related Art

At the time of molding a resin material, a decorative molded body is obtained by disposing a decorative film on a surface of a resin which becomes a molded base material, performing molding, and imparting metallic gloss to the surface thereof, coloring the surface to have a desired hue, or providing a desired pattern for the surface.

For example, at the time of formation of a resin molded article, a decorative molded body in which a decorative film is integrated with a surface of an obtained molded body is obtained by disposing the decorative film in a mold, injecting a base material resin into the mold, and performing molding.

The injection molding which is performed after a decorative film is disposed in a mold in advance is usually referred to as film insert molding or simply referred to as insert molding.

According to the insert molding, metallic gloss, a desired hue, a desired pattern, and the like can be imparted to a surface of a molded body, and the adhesiveness of a decorative film to the molded body is improved by integrating the decorative film with a resin base material.

Further, the steps are simpler, and a molded body having a more complicated shape can be formed, compared to a method of bonding a decorative film to a surface of a molded body after formation of the molded body.

As a decorative material for molding, a decorative sheet for molding, including a surface layer, a decorative layer, and a base layer in this order, in which the decorative layer has a layer formed by vacuum-depositing indium, aluminum, silver, tin, nickel, or a combination of these metals on a plastic film has been suggested (for example, see JP2011-079178A).

Further, as another decorative material, a decorative film for vacuum molding, including a base layer, a decorative layer, and a pressure sensitive adhesive layer which includes an acrylic pressure sensitive adhesive and a viscosity imparting agent having a softening point of 90°C to 180°C in this order has been suggested (for example, see JP2016-130017A).

### SUMMARY OF THE INVENTION

In order to realize high designability in a decorative film, it is necessary to reproduce various colors. As a characteristic for reproducing various colors in a decorative film, a decorative film having a deep tint and glossiness has been required as a decorative film.

In the decorative sheet described in JP2011-079178A, since a metal layer is formed by vapor deposition and an obtained metal vapor deposition layer has mirror surface properties, excellent gloss is observed in a case where the layer is observed from a light incident direction. However, excellent gloss may not be observed in a case where the observation angle is different from the light incident direction. Further, since a metal vapor deposition layer has a low shape followability at the time of molding, there is a problem in that application of a decorative film having a metal vapor deposition layer to a molded body with a complicated shape is difficult.

Further, a decorative film described in JP2016-130017A is a decorative film for vacuum molding, and a form of a decorative film having a special pressure sensitive adhesive layer is described as a decorative film used for improving the adhesiveness to a molded base material at a low temperature. Further, it is described that a decorative layer in the decorative film described in JP2016-130017A can be formed by colored ink, and a metal thin film layer can be formed by a gas phase method. However, a method of improving the designability is not considered, and thus it is difficult to obtain an appearance having a deep tint and glossiness with the technique described in JP2016-130017A.

In the present specification, a deep tint indicates a property in which a change in color is seen depending on the viewing angle and a visual effect for a viewer to feel the depth is obtained.

An object of an embodiment of the present invention is to provide a decorative film having a deep tint and glossiness.

An object of another embodiment of the present invention is to provide a decorative molded body having an appearance with a deep tint and glossiness.

The means for achieving the above-described objects includes the following embodiments.
<1> A decorative film comprising: a base film; a reflective layer which contains metal particles and a resin on one surface of the base film; and a colored layer which contains a colorant other than the metal particles on a surface of the reflective layer opposite to a side where the base film is provided.
<2> The decorative film according to <1>, in which the colorant other than the metal particles includes a pigment.
<3> The decorative film according to <1> or <2>, further comprising: a transparent film on a surface of the colored layer opposite to a side where the reflective layer is provided.
<4> The decorative film according to any one of <1> to <3>, in which the reflective layer is provided on the entire surface on one side of the base film.
<5> The decorative film according to any one of <1> to <4>, in which a thickness of the reflective layer is 0.5 µm or greater.
<6> The decorative film according to any one of <1> to <5>, in which a thickness of the colored layer is 5 µm or greater.
<7> The decorative film according to any one of <1> to <6>, in which the colored layer has a laminated structure including a plurality of layers, and the plurality of layers included in the colored layer are layers in which at least any of types of the colorants other than the metal particles or contents of the colorants other than the metal particles are different from one another.
<8> The decorative film according to any one of <1> to <7>, in which the base film contains 60% by mass or greater of an acrylonitrile/butadiene/styrene copolymer resin (hereinafter, also referred to as an ABS resin) with respect to a total amount of the resin contained in the base film.
<9> The decorative film according to any one of <1> to <8>, which is used for insert molding.
<10> A decorative molded body comprising: a molded base material; and the decorative film according to any one of <1> to <9> on the molded base material.

According to an embodiment of the present invention, it is possible to provide a decorative film having a deep tint and glossiness.

According to another embodiment of the present invention, it is possible to provide a decorative molded body having an appearance with a deep tint and glossiness.

### BRIEF DESCRIPTION OF THE DRAWINGS

Fig. 1 is a schematic cross-sectional view illustrating a layer configuration of a decorative film according to an embodiment of the present invention.
Fig. 2 is a schematic cross-sectional view illustrating a layer configuration of a decorative molded body according to an embodiment of the present invention.

### DESCRIPTION OF THE PREFERRED EMBODIMENTS

Hereinafter, a decorative film and a decorative molded body according to an embodiment of the present disclosure will be described in detail.

Further, the numerical ranges shown using "to" in the description below indicate ranges including the numerical values described before and after "to" as the lower limits and the upper limits. Further, in a case where only the upper limits or the lower limits have the units, this means that the whole numerical ranges have the same units.

The "steps" in the present specification include not only independent steps but also steps whose intended purposes are achieved even in a case where the steps cannot be precisely distinguished from other steps.

In the numerical ranges described in a stepwise manner in the present specification, the upper limits or the lower limits described in certain numerical ranges may be replaced with the upper limits or the lower limits in other numerical ranges described in a stepwise manner. Further, in the numerical ranges described in the present specification, the upper limits or the lower limits described in certain numerical ranges may be replaced with values described in examples.

### <Decorative film>

A decorative film according to the embodiment of the present disclosure includes a base film, a reflective layer which contains metal particles and a resin on one surface of the base film, and a colored layer which contains a colorant other than the metal particles on a surface of the reflective layer opposite to a side where the base film is provided.

The mechanism of the decorative film according to the embodiment of the present disclosure is not clear, but is assumed as follows.

As a layer configuration of a decorative film of the related art, for example, the decorative film comprises a metal vapor deposition layer serving as a reflective layer on a base material. Since the metal vapor deposition layer is uniform and a surface thereof is extremely smooth, the light reflectivity in a direction perpendicular to an incident direction is excellent, and excellent metallic gloss is observed. However, the metallic gloss in a case where the layer is observed in other directions is not excellent.

Since the decorative film according to the embodiment of the present disclosure contains metal particles and a resin, the metal particles dispersed in the resin matrix irregularly reflect incidence rays so that excellent metallic gloss can be observed not only in the light incident direction but also in many other directions.

Further, in a case where a colored layer containing a colorant other than the metal particles is provided on the reflective layer, light transmitted from the colored layer to the reflective layer is reflected on a surface of the reflective layer, and the reflected light is transmitted through the colored layer again. Therefore, it is considered that a deep tint can be observed due to the combination of the light reflected on the reflective layer, the light transmitted through the colored layer, and the incidence rays, in addition to light absorption of the colored layer, light reflection, light scattering, and the like. Accordingly, a decorative film having a desired tint and designability can be easily obtained by selecting a colorant used for the colored layer and selecting a region where the colored layer is formed.

It is considered that, since the reflective layer containing metal particles and a resin has excellent shape followability and workability compared to a metal vapor deposition layer formed according to a gas phase method, a molded body having a more complicated shape can be obtained and an additional effect for suppressing defects in appearance caused by cracks of the reflective layer is exhibited in a case where the decorative film is applied to a decorative molded body.

Further, it is considered that the decorative film according to the embodiment of the present disclosure includes a reflective layer having a deep tint and glossiness and containing metal particles and thus has an excellent shielding property for the color of a molded base material disposed behind the reflective layer. Further, the shielding property indicates a property in which the color of a material disposed behind of the decorative film is not visually recognized from the surface side of the decorative film.

Further, the present disclosure is not limited to the above-described assumed mechanism at all.

### [Reflective layer]

The reflective layer contains metal particles and a resin.

The reflective layer containing metal particles and a resin is provided on the surface of the base film of the decorative film so that the decorative film has excellent metallic gloss. The colored layer described below is provided on the surface of the reflective layer opposite to a side where the base film is provided, and the reflective layer reflects light incident from a side of the colored layer of the laminate of the decorative film. Therefore, the decorative film has a deep tint in addition to the above-described gloss. Further, since the decorative film according to the embodiment of the present disclosure has a high shielding property due to the presence of the reflective layer, the decorative film is capable of effectively concealing the hue of the molded base material which is an underlayer at the time of production of a decorative molded body.

From the viewpoint of the shielding property, the total light reflectivity of the reflective layer is preferably 60% or greater, more preferably 70% or greater, and still more preferably 75% or greater.

The total light reflectivity can be measured using a spectrophotometer (for example, spectrophotometer V-570, manufactured by JASCO Corporation).

### (Metal particles)

Examples of the metal particles contained in the reflective layer include aluminum particles, gold particles, platinum particles, silver particles, and copper particles.

Among these, aluminum particles, gold particles, platinum particles, and the like are preferable from the viewpoint that the glossiness of the decorative film is excellent and discoloration over time is unlikely to occur, and aluminum particles are more preferable from the viewpoints of being lightweight and advantageous in cost.

The shapes of the metal particles are not particularly limited and can be selected depending on the purpose thereof.

Examples of the shapes of the metal particles include a spherical shape, a tabular shape, and an elliptical shape.

Examples of the spherical metal particle in the present specification include a perfect spherical particle, a spherical particle which does not have a strictly perfect spherical shape and whose surface is slightly uneven, and a particle in which the ratio between the short diameter and the long diameter is approximately 10:9.

The elliptical particle indicates a particle whose projection shape is an ellipse and examples of the elliptical particle include a spindle-shaped particle.

The tabular particle indicates a particle having a small thickness compared to the projected area thereof and, for example, a particle having an aspect ratio of 10 to 20000 is preferable. Here, in a metal pigment having a small thickness compared to the area thereof, such as a pigment having a scaly shape, the aspect ratio is a value obtained by dividing the average major axis diameter of the pigment by the average thickness of the pigment.

The shapes of the tabular particles are not particularly limited, and examples thereof include particles having any projected shapes such as a circular shape, an elliptical shape, a rectangular shape, a flake shape, a scaly shape, and an indeterminate shape.

From the viewpoint that the light reflectivity becomes excellent, tabular particles are preferable as the metal particles. Further, from the viewpoint that irregular reflection of light easily occurs and a deep tint is likely to be realized, spherical particles are preferable.

As the tabular metal particles, flake-like particles or particles whose projected shape is a rectangle are preferable.

From the viewpoint of the gloss, the major axis diameter of the projected shape is preferably 5 µm or greater, more preferably 10 µm or greater, and still more preferably 15 µm or greater. In the projected shape in the tabular particles, the ratio between the major axis diameter and the minor axis diameter is preferably in a range of 1:1 to 4:1.

Further, from the viewpoint of excellent handling during production, the major axis diameter of the tabular particles is preferably 500 µm or less. From the viewpoint that the metal particles in the reflective layer are easily arranged in parallel, it is preferable that the major axis diameter is greater than or equal to the thickness of the layer.

A typical method can be used as the method of measuring the size of the metal particles.

For example, the size of the particles can be measured by enlarging and observing the particles using a transmission electron microscope (TEM), a field emission transmission electron microscope (FE-TEM), a field emission scanning electron microscope (FE-SEM), or the like.

In the present specification, 100 pieces of the metal particles observed by being enlarged by any of the above-described devices are randomly selected, the maximum length (major axis diameter) of each particle in the major axis direction is measured, and the average value of the measured major axis diameters is employed as the average major axis diameter. In metal particles with various shapes such as an elliptical shape, a rectangular shape, a flake shape, an indeterminate shape, and a scaly shape, the average major axis diameter is set to be obtained by measuring the length of each particle in the major axis direction in a case of measuring the particle diameter.

The major axis diameter indicates a long side of a circumscribed rectangle of a particle, the minor axis diameter of a particle indicates a short side of a circumscribed rectangle of the particle, and the average major axis diameter indicates an arithmetic average value of the major axis diameters of 100 particles.

For example, in order to measure the size of particles contained in commercially available plate-like metal pigment-containing paste, plate-like metal particle dispersion liquids, and the like, an excess amount of a solvent that does not dissolve metals is added to paste or a dispersion liquid, only the metal particles are segregated, and the measurement may be carried out according to the above-described method.

In order to measure the size of plate-like metal particles contained in a decorative film, a metal-containing layer, and the like, matrix components are dissolved and removed using a solvent which can dissolve matrix components of a metal-containing layer and does not dissolve metals, only the plate-like metal particles are segregated, and the measurement may be carried out according to the above-described method. In a case of a decorative film, first, a base film is peeled from the decorative film so that only a metal-containing layer remains, and the measurement may be carried out in the same manner as described above.

As the metal particles, commercially available products may be used.

Examples of the commercially available products of aluminum metal particles include GX Series, BS Series, and MH Series (all manufactured by Asahi Kasei Chemicals Corporation), ALPASTE Series and DECOMET Series (both manufactured by Toyo Aluminium K.K.).

The content of the metal particles in the reflective layer is preferably in a range of 1% by mass to 50% by mass, more preferably in a range of 5% by mass to 45% by mass, and still more preferably in a range of 10% by mass to 40% by mass with respect to the total mass of the reflective layer.

In a case where the content of the metal particles in the reflective layer is 1% by mass or greater, the gloss of the decorative film becomes excellent, and the shielding property is further improved. Further, in a case where the content of the metal particles in the reflective layer is 50% by mass or less, the weight of the decorative film can be reduced.

### (Dispersant)

From the viewpoint that the uniform dispersibility of the metal particles in the reflective layer becomes excellent, it is preferable that the reflective layer contains a dispersant of the metal particles.

In a case where the reflective layer contains a dispersant of the metal particles, the dispersibility of the metal particles in the reflective layer is improved, and a deep tint in the decorative film is likely to be realized, and the shielding property is further improved.

Examples of the dispersant include a silicone polymer, an acrylic polymer, and a polyester polymer, and the dispersant can be appropriately selected and then used depending on the type, the shape, and the like of the metal particles. In a case where the heat resistance is expected to be imparted to the decorative film, for example, a silicone polymer such as a graft type silicone polymer is suitably used.

The weight-average molecular weight of the dispersant is preferably in a range of 1000 to 5000000, more preferably in a range of 2000 to 3000000, and particularly preferably in a range of 2500 to 3000000. In a case where the weight-average molecular weight thereof is 1000 or greater, the dispersibility of the metal particles is further improved.

For example, the weight-average molecular weight can be measured using gel permeation chromatography (GPC) under the following conditions.
- Measurement device: EcoSEC HLC-8320 (trade name, manufactured by Tosoh Corporation)
- Column: GPC column TSKgel Super HZM-H (manufactured by Tosoh Corporation)
- Carrier: tetrahydrofuran
- Measurement temperature: 40°C
- Carrier flow rate: 1.0 ml/min
- Sample concentration: 0.1% by mass
- Detector: differential refractive index (RI) detector
- Standard substance: monodisperse polystyrene

As the dispersant of the metal particles, commercially available products may be used. Examples of the commercially available products include EFKA 4300 (trade name, manufactured by BASF SE, acrylic polymer dispersant), HOMOGENOL (registered trademark) L-18, HOMOGENOL L-95, and HOMOGENOL L-100 (all manufactured by Kao Corporation), SOLSPERSE (registered trademark) 20000 (manufactured by Lubrizol Corporation), and DISPERBYK (registered trademark) 110, DISPERBYK 164, DISPERBYK 180, and DISPERBYK 182 (all manufactured by BYK Chemie GmbH).

In a case where the reflective layer contains a dispersant of the metal particles, the reflective layer may contain one or two or more kinds of dispersants.

The content of the dispersant of the metal particles is preferably in a range of 1 part by mass to 30 parts by mass with respect to 100 parts by mass of the metal particles.

From the viewpoints of the uniform dispersibility and the dispersion stability of the metal particles, it is preferable that a metal particle dispersion containing the metal particles and the dispersant thereof is prepared in advance and the dispersion is mixed with a resin at the time of formation of the reflective layer.

Further, a commercially available metal particle dispersion may be used.

### (Resin)

The reflective layer contains at least one resin. The resin in the reflective layer functions as a binder that fixes the metal particles in the reflective layer.

The resin is not particularly limited and can be selected from known resins. From the viewpoint of achieving both of the deep tint and the glossiness, the resin is preferably a transparent resin. Specifically, a resin having a total light transmittance of 80% or greater is preferable.

The total light transmittance can be measured using a spectrophotometer (for example, spectrophotometer UV-2100, manufactured by Shimadzu Corporation).

Examples of the resin include an acrylic resin, a silicone resin, an ester resin, a urethane resin, and an olefin resin.

Further, the resin may be a polymerized compound obtained by polymerizing (curing) a polymerizable compound (monomer) described below. In a case where a resin obtained by curing a polymerizable compound is used, the hardness of the decorative film is improved.

Among these, from the viewpoint of the transparency, an acrylic resin, a silicone resin, or an ester resin is preferable, and an acrylic resin or a silicone resin is more preferable. Further, from the viewpoint of the heat resistance, a silicone resin is preferable.

In the present specification, an "acrylic resin" indicates a resin having a structural unit derived from an acrylic monomer having a (meth)acryloyl group. The concept of the (meth)acryloyl group includes a methacryloyl group and an acryloyl group.

Examples of the acrylic resin include a homopolymer of acrylic acid, a homopolymer of methacrylic acid, a homopolymer of acrylic acid ester, a homopolymer of methacrylic acid ester, a copolymer of acrylic acid and another monomer, a copolymer of methacrylic acid and another monomer, a copolymer of acrylic acid ester and another monomer, and a copolymer of methacrylic acid ester and another monomer.

Examples of the acrylic resin include a glycidyl methacrylate adduct of a copolymer of cyclohexyl methacrylate, methyl methacrylate, and methacrylic acid; a random copolymer of benzyl methacrylate and methacrylic acid; a copolymer of allyl methacrylate and methacrylic acid; and a copolymer of benzyl methacrylate, methacrylic acid, and hydroxyethyl methacrylate.

The silicone resin can be selected from known silicone resins, and examples thereof include a methyl-based straight silicone resin, a methyl phenyl-based straight silicone resin, an acrylic resin-modified silicone resin, an ester resin-modified silicone resin, an epoxy resin-modified silicone resin, an alkyd resin-modified silicone resin, and a rubber-based silicone resin.

Among these, a methyl-based straight silicone resin, a methyl phenyl-based straight silicone resin, an acrylic resin-modified silicone resin, or a rubber-based silicone resin is preferable, and a methyl-based straight silicone resin, a methyl phenyl-based straight silicone resin, or a rubber-based silicone resin is more preferable.

As the silicone resin, commercially available products may be used. Examples of the commercially available products include KR-300, KR-311, KR-251, X-40-2406M, and KR-282 (all manufactured by Shin-Etsu Chemical Co., Ltd.).

Examples of the ester resin include linear saturated polyester synthesized from aromatic dibasic acid or a derivative for forming the ester thereof and a diol or a derivative for forming the ester thereof.

Specific examples of the linear saturated polyester include polyethylene terephthalate, polyethylene isophthalate, polybutylene terephthalate, poly(1,4-cyclohexylenedimethylene terephthalate), and polyethylene-2,6-naphthalate.

The content of the resin in the reflective layer is preferably in a range of 20% by mass to 90% by mass, more preferably in a range of 30% by mass to 85% by mass, and still more preferably in a range of 35% by mass to 80% by mass with respect to the total mass of the reflective layer.

In a case where the content of the resin in the reflective layer is 20% by mass or greater, the resin is likely to function as a binder. In a case where the content of the resin in the reflective layer is 90% by mass or less, a deep tint tends to be obtained and the glossiness is further improved.

### (Polymerizable compound)

The reflective layer may contain a cured product of a polymerizable compound or an uncured polymerizable compound.

The polymerizable compound is not particularly limited, and examples thereof include a compound containing a polymerizable group such as an unsaturated group. Examples of the polymerizable group include an ethylenically unsaturated group and an epoxy group.

As the polymerizable compound, an ethylenically unsaturated bond-containing compound is preferable, and a compound containing a (meth)acryloyl group is more preferable.

Examples of the ethylenically unsaturated bond-containing compound include polymerizable compounds described in paragraphs [0023] and [0024] of JP4098550B and bifunctional polymerizable compounds such as tricyclodecanediol dimethanol diacrylate.

Preferred examples of the polymerizable compound include a polymerizable compound containing at least five ethylenically unsaturated groups such as dipentaerythritol hexaacrylate (DPHA), dipentaerythritol (penta/hexa)acrylate, or tripentaerythritol octaacrylate; a urethane-based monomer such as a urethane (meth)acrylate compound; and a bifunctional polymerizable compound such as ethoxylated bisphenol A diacrylate or tricyclodecanediol dimethanol diacrylate.

The polymerizable compound may be used alone or in combination of two or more kinds thereof. From the viewpoint of curing sensitivity, it is preferable to use a combination of two or more kinds thereof.

Further, from the viewpoint that the moldability becomes excellent, it is more preferable to use a polymerizable compound having a urethane bond such as urethane (meth)acrylate or a polymerizable compound having an alkylene oxide group.

The average molecular weight of the polymerizable compound is preferably in a range of 200 to 3000, more preferably in a range of 250 to 2600, and particularly preferably in a range of 280 to 2200.

The content of the polymerizable compound in the reflective layer is preferably in a range of 1% by mass to 50% by mass, more preferably in a range of 5% by mass to 45% by mass, and still more preferably in a range of 10% by mass to 40% by mass with respect to the total mass of the reflective layer.

### (Polymerization initiator)

In a case where the reflective layer contains a cured product of the polymerizable compound, it is preferable to use a polymerization initiator for curing the polymerizable compound. As the polymerization initiator, a photopolymerization initiator is preferable.

As the photopolymerization initiator, the polymerization initiators described in paragraphs [0031] to [0042] of JP2011-095716A and the oxime-based polymerization initiators described in paragraphs [0064] to [0081] of JP2015-014783A.

Examples of the polymerization initiator include 1,2-octanediol-1-[4-(phenylthio)-2-(o-benzoyloxime)] (for example, IRGACURE (registered trademark) OXE-01, manufactured by BASF SE), ethan-1-one, [9-ethyl-6-(2-methylbenzoyl)-9H-carbazol-3-yl]-1-(o-acetyloxime) (for example, IRGACURE (registered trademark) OXE-02, manufactured by BASF SE), 2-(dimethylamino)-2-[(4-methylphenyl)methyl]-1-[4-(4-morpholinyl)phenyl]-1-butanone (for example, IRGACURE (registered trademark) 379EG, manufactured by BASF SE), 2-methyl-1-(4-methylthiophenyl)-2-morpholinopropan-1 -one (for example, IRGACURE (registered trademark) 907, manufactured by BASF SE), 2-hydroxy-1-{4-[4-(2-hydroxy-2-methyl-propionyl)-benzyl]phenyl}-2-methyl-propan-1-one (for example, IRGACURE (registered trademark) 127, manufactured by BASF SE), 2-benzyl-2-dimethylamino-1-(4-morpholinophenyl)-butanone-1 (for example, IRGACURE (registered trademark) 369, manufactured by BASF SE), 2-hydroxy-2-methyl-1-phenyl-propan-1-one (for example, IRGACURE (registered trademark) 1173, manufactured by BASF SE), 1-hydroxy-cyclohexyl-phenyl-ketone (for example, IRGACURE (registered trademark) 184, manufactured by BASF SE), 2,2-dimethoxy-1,2-diphenylethan-1-one (for example, IRGACURE (registered trademark) 651, manufactured by BASF SE), Lunar 6 (trade name, manufactured by DKSH Management Ltd.) serving as an oxime ester-based polymerization initiator, 2,4-diethylthioxathone (for example, KAYACURE DETX-S, manufactured by Nippon Kayaku Co., Ltd.), and DFI-091 and DFI-020 (both manufactured by Daito Chemix Co., Ltd.) serving as a fluorene oxime-based polymerization initiator.

Among these, it is preferable to use initiators other than the halogen-containing polymerization initiator such as trichloromethyltriazine-based compound from the viewpoint of improving the curing sensitivity and more preferable to use an oxime-based polymerization initiator such as an α-aminoalkylphenone-based compound, an α-hydroxyalkylphenone-based compound, or an oxime ester-based compound.

The amount of the polymerization initiator to be used is preferably in a range of 1 part by mass to 15 parts by mass and more preferably in a range of 2 parts by mass to 10 parts by mass with respect to 100 parts by mass of the polymerizable compound.

### (Other components)

The reflective layer may contain additives other than the above-described components as necessary.

Examples of the additives include the surfactants described in paragraph [0017] of JP4502784B and paragraphs [0060] to [0071] of JP2009-237362A, the thermal polymerization inhibitors (also referred to as polymerization inhibitors, preferably phenothiazine) described in paragraph [0018] of JP4502784B, and other additives described in paragraphs [0058] to [0071] described in JP2000-310706A.

### (Thickness of reflective layer)

The thickness of the reflective layer is preferably 0.3 µm or greater and more preferably 0.5 µm or greater.

The thickness of the reflective layer is preferably in a range of 0.3 µm to 20 µm, more preferably in a range of 1.0 µm to 20 µm, and still more preferably in a range of 3.0 µm to 15 µm.

In a case where the thickness of the reflective layer is 0.3 µm or greater, the gloss becomes excellent, and the concealing property is further improved. In a case where the thickness of the reflective layer is 20 µm or less, the moldability becomes excellent.

### (Formation of reflective layer)

A method of forming the reflective layer is not particularly limited and can be appropriately selected depending on the purpose thereof.

A composition for forming a reflective layer is prepared by mixing the above-described metal particles, resin, and respective components to be combined as desired. The metal particles may be used for preparing the composition for forming a reflective layer as a metal particle dispersant.

The reflective layer can be formed by coating one surface of the base film with the obtained composition for forming a reflective layer to form a composition layer for forming a reflective layer and drying the composition layer.

The composition layer for forming a reflective layer may be formed by coating the surface using a known coating device such as a dip coater, a die coater, a slit coater, a bar coater, or a gravure coater and may be formed using a Langmuir-Blodgett (LB) film method, a self-organization method, or a spray coating method.

The composition for forming a reflective layer can be prepared by mixing a solvent, a surfactant, and the like with the above-described components.

As the solvent which can be contained in the composition for forming a reflective layer, a solvent which has been typically used can be used without particular limitation. Specific examples thereof include solvents such as esters, ethers, ketones, and aromatic hydrocarbons.

Further, any of methyl ethyl ketone, propylene glycol monomethyl ether, propylene glycol monomethyl ether acetate, cyclohexanone, cyclohexanol, methyl isobutyl ketone, ethyl lactate, methyl lactate, and the like which are the same as the solvents described in paragraphs [0054] and [0055] of US2005/0282073A can be suitably used as the solvent in the composition for forming a reflective layer.

Among these, 1-methoxy-2-propyl acetate, methyl 3-ethoxypropionate, ethyl 3-ethoxypropionate, ethyl cellosolve acetate, ethyl lactate, butyl lactate, methyl 3-methoxypropionate, 2-heptanone, cyclohexanone, diethylene glycol monoethyl ether acetate (ethyl carbitol acetate), diethylene glycol monobutyl ether acetate (butyl carbitol acetate), propylene glycol methyl ether acetate, methyl ethyl ketone, or the like is preferably used as the solvent in the composition for forming a reflective layer.

These solvents may be used alone or in combination of two or more kinds thereof.

In a case where the reflective layer contains a polymerizable compound and a polymerization initiator as the components thereof, an exposure step may be performed because a composition layer for forming a reflective layer is formed and then at least a part of the polymerizable compound contained in the composition layer for forming a reflective layer is cured to form a cured product. The hardness of the reflective layer is further improved by performing the exposure step so that the polymerizable compound contained in the reflective layer is formed into a cured product.

As the exposure step, the method described in paragraphs [0035] to [0051] of JP2006-023696A can also be suitably used in the present invention.

The exposure step can also be performed for forming a colored layer described below in the same manner as that for forming the reflective layer in a case where a composition for forming a colored layer described below contains a polymerizable compound.

The light source for exposure can be used after being appropriately selected from light sources which can radiate light having a wavelength range (for example, 365 nm or 405 nm) in which the polymerizable compound can be cured. Specific examples thereof include an ultra-high pressure mercury lamp, a high pressure mercury lamp, and a metal halide lamp.

The exposure amount is typically in a range of 5 mJ/cm² to 1000 mJ/cm² and preferably in a range of 10 mJ/cm² to 500 mJ/cm².

The reflective layer may be formed on at least a portion of the base film. However, from the viewpoint of increasing the decoration effect, it is preferable that the reflective layer is provided on the entire one surface of the base film because a region with a deep tint can be sufficiently formed.

### [Base film]

As the base film in the decorative film, films formed of various materials can be used. Among these, it is preferable to use a film which is not optically distorted or a film having a high transparency.

The total light transmittance of the base film is preferably 80% or greater.

The total light transmittance can be measured according to the above-described method.

Examples of the base film include a polyethylene terephthalate (PET) film, a polyethylene naphthalate (PEN) film, an acrylic film, a polycarbonate (PC) film, a triacetyl cellulose (TAC) film, and a cycloolefin polymer (COP) film.

From the viewpoint of the transparency, it is preferable that the base film is a PET film, an acrylic film, or a PC film. Among these, a resin film containing 60% by mass or greater of an acrylonitrile/butadiene/styrene copolymer resin (ABS resin) with respect to the total amount of the resins contained in the base film is more preferable as the base film.

The content of the ABS resin is preferably 80% by mass or greater with respect to the total amount of the resins contained in the base film. The content of the ABS resin in the resins may be 100% by mass, in other words, the base film made of an ABS resin may be used.

As the base film, commercially available products may be used. Examples of the commercially available products include an ABS film (thickness of 250 µm, manufactured by Okamoto Industries, Inc.), an ABS sheet (manufactured by SEKISUI SEIKEI Co., Ltd.), and COSMO SHINE (registered trademark) A4100 (PET film) (manufactured by Toyobo Co., Ltd.).

The reflective layer can be directly formed on one surface of the base film. Further, an optional layer having various functions may be provided on at least one surface of the base film as desired within the range not impairing the effects of the present disclosure.

Specific examples of the optional layer include a scratch resistant layer, a self-repairing layer, an antistatic layer, an antifouling layer, an anti-electromagnetic wave layer, and a conductive layer.

The thickness of the base film is preferably in a range of 35 µm to 300 µm and more preferably in a range of 50 µm to 250 µm.

### [Colored layer]

The decorative film includes a colored layer containing a colorant other than the metal particles on the surface of the reflective layer opposite to a side where the base film is provided.

### (Colorant other than metal particles)

The colored layer contains at least one colorant other than the metal particles (hereinafter, also simply referred to as a "colorant").

The colorant which can be contained in the colored layer is not particularly limited and can be used after being appropriately selected from colorants for desired colors.

The colorant may be a pigment or a dye. From the viewpoint of easily realizing a deep tint, it is preferable that the colored layer contains a pigment.

As the pigment, various known inorganic pigments and organic pigments of the related art can be used.

Examples of the inorganic pigment include white pigments described in paragraphs [0015] and [0114] of JP2005-007765A.

Specific examples of the inorganic pigment include white pigments such as titanium dioxide, zinc oxide, lithopone, light calcium carbonate, white carbon, aluminum oxide, aluminum hydroxide, and barium sulfate; and black pigments such as carbon black, titanium black, titanium carbon, iron oxide, titanium oxide, and graphite. Further, the metal pigment having metallic gloss used for the reflective layer described above is not included in the inorganic pigments which can be used in the colored layer.

Examples of the organic pigment include organic pigments described in paragraph [0093] of JP2009-256572A.

Specific examples of the organic pigment include red pigments such as C. I. Pigment Red 177, 179, 224, 242, 254, 255, and 264; yellow pigments such as C. I. Pigment Yellow 138, 139, 150, 180, and 185; orange pigments such as C. I. Pigment Orange 36, 38, and 71; green pigments such as C. I. Pigment Green 7, 36, and 58; blue pigments such as C. I. Pigment Blue 15:6; and purple pigments such as C. I. Pigment Violet 23.

These inorganic pigments and organic pigments may be used alone or in combination of two or more kinds thereof. Further, the inorganic pigments and organic pigments may be used in combination.

From the viewpoints of achieving both of the deep tint and the glossiness, as the pigment serving as a colorant, a pigment whose number average particle diameter of primary particles is in a range of 10 nm to 300 nm is preferable, a pigment whose number average particle diameter of primary particles is in a range of 30 nm to 270 nm is more preferable, and a pigment whose number average particle diameter of primary particles is in a range of 50 nm to 250 nm is still more preferable.

In a case where the number average particle diameter of the pigment serving as a colorant is 10 nm or greater, a deep tint is more likely to be realized. Further, in a case where the number average particle diameter of the pigment is 300 nm or less, the gloss is further improved.

As the number average particle diameter of primary particles of the pigment in the present specification, a value obtained by calculating the diameters (equivalent circle diameters) of 100 particles in a case where the electron micrograph images of the pigment particles are formed into circles having the same areas and arithmetically averaging the equivalent circle diameters of 100 particles is employed.

As the colorant, a pigment (hereinafter, also referred to as a bright pigment) having a light-transmitting property and a light reflectivity may be used.

Examples of the bright pigment include mica, glass, titanium oxide-coated mica (titanium mica), titanium oxide-coated glass, titanium oxide-coated talc, iron oxide-coated mica, a pearl pigment, and bismuth pearl. Further, a pigment in which a plurality of coated layers of titanium oxide are laminated, a pigment in which a coated layer of silicon oxide is laminated on a coated layer of titanium oxide, and the like are also exemplified.

Examples of the mica pigment include TWINCLEPEARL Series, ULTIMICA Series, and PEARL-GLAZE Series (all manufactured by Nihon Koken Kogyo Co., Ltd.), and MicaBased Series and fluorphlogophiteBased (both manufactured by Sandream Impact LLC). Examples of the glass pigment include METASHINE Series (manufactured by Nippon Sheet Glass Co., Ltd.) and GlassBased Series (manufactured by Sandream Impact LLC).

The content of the colorant in the colored layer is preferably in a range of 1% by mass to 60% by mass, more preferably in a range of 5% by mass to 55% by mass, and still more preferably in a range of 10% by mass to 50% by mass with respect to the total mass of the colored layer.

In a case where the content of the colorant in the colored layer is 1% by mass or greater, a deep tint is likely to be reproduced. Meanwhile, in a case where the content of the colorant is 60% by mass or less, the gloss is further improved.

### (Resin)

The colored layer contains at least one resin. The resin in the colored layer functions as a binder that fixes the colorant.

The resin is not particularly limited and can be selected from known resins. From the viewpoint of easily obtaining an appearance having a deep tint and gloss, the resin is preferably a transparent resin. Specifically, a resin having a total light transmittance of 80% or greater is preferable as the transparent resin.

The total light transmittance can be measured according to the above-described method.

Examples of the resin include an acrylic resin, a silicone resin, an ester resin, a urethane resin, and an olefin resin.

Further, the resin may be a polymerized compound obtained by polymerizing (curing) a polymerizable compound (monomer) described below. It is preferable that a resin obtained by curing a polymerizable compound is used from the viewpoint that the hardness of the decorative film is further improved.

Examples of the resin used in the colored layer include the same resins as those used in the reflective layer described above, and preferred examples thereof are the same as described above.

The colored layer may be a single layer or a laminated structure having a plurality of two or more layers.

In a case where the colored layer has a laminated structure having a plurality of layers, it is preferable that the plurality of layers included in the colored layer are layers in which at least any of the types of the colorant or the contents of the colorant are different from one another.

According to the laminated structure, for example, in a case where the plurality of layers contain colorants with different hues, an appearance with a complicated tint can be exhibited. For example, in a case where colored layers in which the contents of the same colorant are different from one another are laminated, a deeper tint can be exhibited even in a case of a single hue.

Among the plurality of the colored layers, some colored layers can be partially provided, and the remaining colored layers can be provided on the entire surface.

Further, a form in which only one optional layer in the plurality of colored layers contains the above-described bright pigment may be employed. In a case where one layer from among the plurality of the colored layers contains the bright pigment, the effect that the reflectivity is not high and the glossy feeling is excellent can be obtained.

Further, in the laminated structure formed by superimposing a plurality of colored layers, it is preferable that a layer having a higher total light transmittance is disposed on a side farther from the reflective layer from a viewpoint of easily obtaining a deep tint.

### (Thickness of colored layer)

The thickness of the colored layer is preferably 2 µm or greater.

The thickness of the colored layer is preferably in a range of 2 µm to 60 µm, more preferably in a range of 4 µm to 60 µm, and still more preferably in a range of 5 µm to 50 µm.

In a case where the thickness of the colored layer is 5 µm or greater, a deep tint is likely to be reproduced. In a case where the thickness of the colored layer is 50 µm or less, the glossiness is further improved.

Further, in a case where the colored layer has a laminated structure having a plurality of layers, it is preferable that the total thickness of the plurality of colored layers is in the above-described range.

### (Light transmittance of colored layer)

The light transmittance of the colored layer is preferably in a range of 3% to 30% in terms of the total light transmittance.

The total light transmittance can be measured according to the above-described method.

In a case where the total light transmittance of the colored layer is 3% or greater, light incident on the decorative film tends to reach the reflective layer after being transmitted through the colored layer. Accordingly, not only the incidence rays but also the light reflected and scattered by the reflective layer are likely to be transmitted through the colored layer again, and light transmission, light reflection, light scattering, and the like occur in the colored layer due to the combination of the light and the hue of the colorant contained in the colored layer. Therefore, a deep tint is likely to be realized.

### (Formation of colored layer)

A method of forming the colored layer is not particularly limited and can be appropriately selected depending on the purpose thereof. Examples of the method of forming the colored layer include a coating method, a transfer method, and a printing method.

In a case where the colored layer is formed according to the coating method, a composition for forming a colored layer is prepared by mixing the above-described colorant, resin, and each component to be combined as desired. Further, in a case where a pigment is used as the colorant, the pigment may be used together with a pigment particle dispersant or the pigment may be used for preparing a composition for forming a colored layer as a pigment particle dispersion. The dispersant may be appropriately selected from known dispersants suitable for the kind of the pigment to be used, similar to the metal particles, and then used.

The surface of the reflective layer opposite to a side where the base film is provided is coated with the obtained composition for forming a colored layer to form a composition layer for forming a colored layer, and the composition layer is dried, thereby forming a colored layer.

In a case where the colored layer is provided on the entire surface of the reflective layer, the composition layer for forming a colored layer may be formed by coating the surface using a known coating device such as a dip coater, a die coater, a slit coater, a bar coater, or a gravure coater and may be formed using a Langmuir-Blodgett (LB) film method, a self-organization method, or a spray coating method.

In a case where the colored layer is formed on a part of the surface of the reflective layer, the composition for forming a colored layer may be formed according to a printing method such as screen printing, offset printing, or ink jet printing. From the viewpoint of easily forming a colored layer having a large thickness, a screen printing method is preferable.

In the case where the colored layer is formed on a part of the surface of the reflective layer, a design can be formed depending on the purpose thereof. Examples thereof include a form in which the colored layer is continuously formed only in a partial region on the surface of the reflective layer, a form in which the colored layer is formed on the entire surface of the reflective layer such that a pattern such as a stripe, a dot, an indeterminate shape, or the like is repeatedly formed, and a form in which characters, specific figures, or the like are formed on a part of the surface of the reflective layer.

In a case where the composition for forming a colored layer contains a polymerizable compound, the exposure step described in the formation of the reflective layer may be performed.

In a case where the colored layer is formed according to a transfer method, the colored layer can be provided by transferring the colored layer formed of the composition for forming a colored layer onto the reflective layer according to a method of the related art.

It is preferable that the colored layer is directly formed on the surface of the reflective layer.

As described below, in the decorative film according to the embodiment of the present disclosure, an optional layer may be provided in addition to the base film, the reflective layer, and the colored layer. However, for example, in a case where the colored layer is provided on the surface of the reflective layer through an adhesive layer, since the adhesive layer having a different refractive index is provided therebetween, the light reflected on the reflective layer is refracted before reaching the colored layer, and thus a desired deep tint is unlikely to be obtained. Therefore, from the viewpoint that the designability due to the functions of the reflective layer and the colored layer is effectively exhibited, it is preferable that any layer is not provided between the reflective layer and the colored layer and the colored layer is directly provided on the surface of the reflective layer.

### [Layer configuration of decorative film]

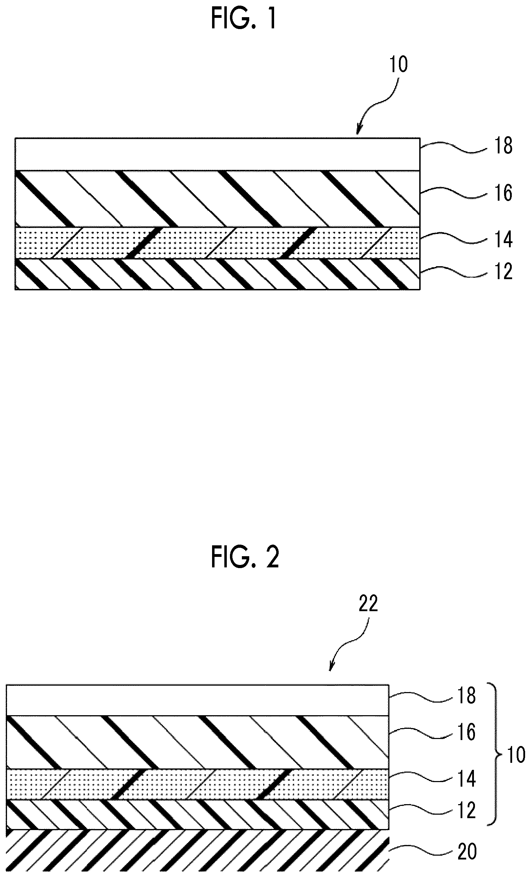

The layer configuration of the decorative film will be described with reference to Fig. 1. Fig. 1 is a schematic cross-sectional view illustrating the layer configuration of the decorative film according to an embodiment of the present disclosure. A decorative film 10 includes a base film 12, a reflective layer 14 on one surface of the base film 12, and a colored layer 16 on a surface of the reflective layer 14 opposite to a side where the base film 12 is provided. The decorative film 10 illustrated in Fig. 1 includes a transparent film 18 on a surface of the colored layer 16. The transparent film 18 is an optional layer comprised as desired.

### (Optional layer)

The decorative film may include layers, as desired, other than the reflective layer and the colored layer described above on the base film as long as the effects in the present disclosure are not impaired.

Examples of the optional layer include a transparent film, and an adhesive layer.

### (Transparent film)

From the viewpoints of protecting the colored layer and further improving the scratch resistance of the decorative film, it is preferable that the decorative film includes a transparent film on a surface of the colored layer opposite to a side where the reflective layer is provided.

The transparent film which can be used as the above-described transparent film is not particularly limited as long as the transparent film has a required hardness and scratch resistance.

The term "transparent" in the transparent film indicates that the total light transmittance is 85% or greater. The total light transmittance of the transparent film can be measured according to the above-described method.

As the transparent film, a film obtained by forming a film using a transparent resin is preferable, and examples thereof include a PET film, a PEN film, an acrylic film, a PC film, a TAC film, and a COP film. Among these, an acrylic film is preferable.

Further, the thickness of the transparent film is preferably in a range of 50 µm to 150 µm.

As the transparent film, a commercially available product may be used, and examples of the commercially available product include ACRYPRENE (registered trademark) HBS010 (acrylic resin film, manufactured by Mitsubishi Rayon Co., Ltd.), TECHNOLLOY (registered trademark) S001G (acrylic resin film, manufactured by Sumitomo Chemical Co., Ltd.), C000 (polycarbonate resin film, manufactured by Sumitomo Chemical Co., Ltd.), and C001 (acrylic resin/polycarbonate resin-laminated film, manufactured by Sumitomo Chemical Co., Ltd.).

The total thickness of the decorative film is preferably in a range of 50 µm to 600 µm and more preferably in a range of 100 µm to 500 µm.

The deep tint and the glossiness can be imparted to a surface of a decorative molded body by disposing the decorative film according to the embodiment of the present disclosure on a molded base material at the time of formation of the decorative molded body.

From the viewpoint of the shielding property, the optical density of the decorative film is preferably in a range of 2.5 to 6.0 and more preferably in a range of 3.0 to 5.5.

The optical density can be measured using, for example, a transmission densitometer such as BMT-1 (manufactured by Sakata Inx Corporation).

### (Method of producing decorative film)

A method of producing the decorative film includes: a step of coating the base film with the composition for forming a reflective layer and drying the composition to form a reflective layer; and a step of applying the composition for forming a colored layer to the surface of the obtained reflective layer to form a colored layer.

The details of the formation methods in the step of forming the reflective layer and the step of forming the colored layer according to the method of producing the decorative film are as described above.

### <Decorative molded body>

The decorative molded body according to the embodiment of the present disclosure is a decorative molded body comprising the above-described decorative film according to the embodiment of the present disclosure, on the molded base material.

The decorative film and the molded base material may be in direct contact with each other or may be provided by interposing an adhesive layer therebetween.

Since the decorative molded body according to the embodiment of the present disclosure comprises the above-described decorative film according to the embodiment of the present disclosure, the decorative molded body has a deep tint and glossiness.

### (Molded base material)

A resin base material is used as the molded base material. Examples of the resin which can be used as a molded material include an acrylic resin, a silicone resin, an ester resin, a urethane resin, and an olefin resin.

### (Adhesive layer)

The decorative film may be disposed on the molded base material through an adhesive layer at the time of formation of the decorative molded body.

An adhesive for forming the adhesive layer can be appropriately selected from known adhesives. Specific examples thereof include adhesives containing a vinyl chloride/vinyl acetate copolymer and an acrylic resin.

As the adhesive, a commercially available product may be used, and examples of the commercially available product include IMB-003 (manufactured by Teikoku Printing Inks Mfg. Co., Ltd.).

### <Method of producing decorative molded body>

A method of producing the decorative molded body includes a step of fixing the decorative film according to the embodiment of the present disclosure to the molded base material.

Further, the method of producing the decorative molded body may include a step of peeling the base film of the decorative film as a step other than the step of fixing the decorative film according to the embodiment of the present disclosure to the molded base material.

Hereinafter, the method of producing the decorative molded body will be described in detail. Here, the description will be made using a case where the decorative film and the resin molded body are fixed by insert molding as an example.

Even in a case where the reflective layer contains metal particles and a resin, has excellent moldability, and is suitable for a molded body having deep and complicated unevenness, since the reflective layer follows the deformation of the decorative film, the above-described decorative film according to the embodiment of the present disclosure is suitable for insert molding.

A decorative molded body in which the decorative film is bonded to the surface thereof can be produced by performing a step of disposing a decorative film formed to have a quadrangular shape with a certain dimension in a mold for injection molding and performing mold clamping; a step of injecting a molten resin into the mold; and a step of taking out the injected resin after solidification of the injected resin. Hereinafter, the method of producing the decorative molded body will be described based on the example of the production method including the above-described steps.

Since the decorative film is molded into a three-dimensional shape by performing the above-described steps, a decorative molded body having a three-dimensional shape, to which the deep tint and the glossiness of the decorative film have been imparted, is prepared.

The mold (that is, a molding mold) for injection molding used for producing the decorative molded body comprises a mold (that is, a male mold) having a shape of a projection and a mold (that is, a female mold) having a shape of a depression corresponding to the shape of the projection, and the mold clamping is performed after the decorative film is disposed on the molding surface which is the inner peripheral surface of the female mold.

Here, before the decorative film is disposed in the molding mold, the decorative film can be supplied to the molding mold after a three-dimensional shape is imparted to the decorative film in advance by molding (preforming) the decorative film using the molding mold.

Further, at the time of disposition of the decorative film in the molding mold, the positioning of the decorative film and the molding mold needs to be carried out in a state in which the decorative film is inserted into the molding mold.

As a method of performing positioning of the decorative film and the molding mold in the state in which the decorative film is inserted into the molding mold, a method of inserting a fixing pin included in a male mold into a positioning hole included in a female mold and holding the state may be exemplified.

Here, the positioning hole is formed in advance at an end portion (a position where the three-dimensional shape has not been imparted after molding) of the decorative film in the female mold.

Further, the fixing pin is formed in advance at a position where the fixing pin fits with the positioning hole in the male mold.

Further, as the method of performing positioning of the decorative film and the molding mold in the state in which the decorative film is inserted into the molding mold, the following method can be used in addition to the method of inserting a fixing pin into a positioning hole.

Further, a method of performing fine adjustment and alignment by drive of a transport device side of the decorative film targeting a positioning mark which is preliminarily made on the position in the decorative film where the three-dimensional shape has not been imparted after molding is exemplified. In this case of the method, it is preferable that the positioning mark is recognized at two or more diagonal points at the time of being viewed from a product part of an injection molded article (decorative molded body).

After the decorative film and the molding mold are positioned and the molding mold is subjected to mold clamping, the molten resin is injected into the molding mold into which the decorative film has been inserted. At the time of injection, the molten resin is injected to the reflective layer side of the decorative film.

The temperature of the molten resin to be injected into the molding mold is set according to the physical properties of the resin to be used. For example, in a case where the resin to be used is an acrylic resin, it is preferable that the temperature of the molten resin is set to be in a range of 240°C to 260°C.

Further, the position of an inlet (injection port) of the male mold may be set according to the shape of the molding mold or the type of the molten resin for the purpose of suppressing abnormal deformation of the decorative film due to the heat or gas generated at the time of injection of the molten resin into the molding mold.

After the molten resin injected to the molding mold into which the decorative film has been inserted is solidified, the molding mold is subjected to mold clamping, and an intermediate decorative molded body in which the decorative film has been fixed to the molded base material which is the solidified molten resin is taken out from the molding mold.

In the intermediate decorative molded body, a burr is integrated with a dummy portion of the decorative molded body around the decorative portion which becomes a final product (decorative molded body). Here, an insertion hole formed by insertion of the fixing pin in the above-described positioning is present in the dummy portion.

Therefore, the decorative molded body according to the embodiment of the present disclosure can be obtained by performing a finishing process of partially removing the bur and the dummy portion from the decorative portion in the intermediate decorative molded body before the finishing process.

The base film of the decorative film may be peeled from the obtained decorative molded body as necessary.

### [Layer configuration of decorative molded body]

The layer configuration of the decorative molded body will be described in detail with reference to Fig. 2. Fig. 2 is a schematic cross-sectional view illustrating the layer configuration of the decorative molded body according to the embodiment of the present disclosure. A decorative molded body 22 is a molded body obtained by disposing the above-described decorative film 10 according to the embodiment of the present disclosure on a surface of a molded base material 20. In other words, the decorative molded body 22 having the decorative film 10 on the surface of the molded base material 20 which has been molded is formed such that the decorative film 10 is disposed on the surface of the molded base material 20 in order of the base film 12, the reflective layer 14, the colored layer 16, and the transparent film 18 from the molded base material 20 side.

The decorative molded body according to the embodiment of the present disclosure is a decorative molded body which can be molded into an optional shape and has excellent designability with a deep tint and gloss, and can be applied to various fields of resin molded bodies.

Further, since the decorative molded body according to the embodiment of the present disclosure comprises the above-described decorative film according to the embodiment of the present disclosure on the surface thereof, the decorative film satisfactorily follows the shape during molding even in a case of an abnormal form obtained by placing a complicated uneven shape, and degradation of the concealing property due to occurrence of cracks in the reflective layer is suppressed so that an excellent appearance is achieved.

### EXAMPLES

Hereinafter, the present invention will be described in more detail based on the examples. The scope of the present invention is not limited to the specific examples described below. Further, "parts" are on a mass basis unless otherwise specified.

### [Examples 1 to 21 and Comparative Examples 2 to 4]

### <Preparation of composition for forming decorative film>

### [Preparation of composition for forming reflective layer]

Compositions (coating solutions 1 to 3) for forming a reflective layer and a comparative coating solution (coating solution 4) with the compositions listed in Table 1 shown below were prepared.

The numerical values in Table 1 each indicate parts by mass of each component with respect to the total mass of each coating solution, and "-" indicates that the corresponding component is not contained.

**[Table 1]**

| (parts by mass) | | | | |
|---|---|---|---|---|
| | Coating solution 1 | Coating solution 2 | Coating solution 3 | Coating solution 4 |
| Silver pigment dispersion liquid 1 | 270.0 | - | 270.0 | - |
| Silver pigment dispersion liquid 2 | - | 360.0 | - | - |
| Black pigment dispersion liquid | - | - | - | 360.0 |
| Acrylic resin | 185.1 | 189.2 | 297.4 | 146.7 |
| Monomer | 45.0 | 46.0 | - | 45.4 |
| Polymerization initiator | 0.5 | 0.5 | - | 0.5 |
| Surfactant | 0.5 | 0.5 | 0.5 | 0.5 |
| Organic solvent 1 | 393.6 | 393.6 | 393.6 | 393.6 |
| Organic solvent 2 | 105.3 | 10.2 | 38.5 | 53.3 |
| Total | 1000.0 | 1000.0 | 1000.0 | 1000.0 |

### • Silver pigment dispersion liquid 1

The silver pigment dispersion liquid 1 was prepared according to the following method.

After the types and the amounts of respective components with the compositions described below were mixed to obtain a mixture, the mixture was dispersed by a beads mill for 8 hours using zirconia beads having a diameter of 0.5 mm, thereby obtaining a silver pigment dispersion liquid 1.

**- Composition -**

| | |
|---|---|
| • ALPASTE | 20.0 parts |
| (aluminum metal particles, GX-4100, manufactured by Asahi Kasei Chemicals Corporation) | |
| • Acrylic polymer dispersant (EFKA4300, manufactured by BASF SE) | 2.0 parts |
| 1-methoxy-2-propyl acetate | 78.0 parts |

- Silver pigment dispersion liquid 2: SF Silver AE4141, manufactured by Sanyo Color Works, Ltd., composition (pigment (aluminum particles): 15.0% by mass, dispersion assistant: 0.75% by mass, dispersion solvent (xylene): 84.25% by mass)
- Black pigment dispersion liquid: SF Black GC4151, manufactured by Sanyo Color Works, Ltd., composition (black pigment (carbon black): 15.0% by mass, dispersion resin: 4.5% by mass, dispersion assistant: 1.2% by mass, dispersion solvent (1-methoxy-2-propyl acetate): 79.3% by mass)

The materials used for the compositions other than the metal particle dispersion liquids and the pigment dispersion liquids are as follows.
- Acrylic resin: 40 mass% 1-methoxy-2-propyl acetate solution containing copolymer (weight-average molecular weight Mw of 29000) of benzyl methacrylate and methacrylic acid (molar ratio of 70/30)
- Monomer: A-GLY-20E (solid content of 100% by mass), manufactured by Shin-Nakamura Chemical Co., Ltd.
- Polymerization initiator 1: OXE-02 (ethanone, 1-[9-ethyl-6-(2-methylbenzoyl)-9H-carbazol-3-yl]-, 1-(o-acetyloxime)), manufactured by BASF SE
- Surfactant: MEGAFACE (registered trademark) F-551, manufactured by DIC Corporation, methyl isobutyl ketone solution containing perfluoroalkyl group-containing phosphoric acid ester type amine neutralized product (solid content of 30% by mass)
- Organic solvent 1: methyl ethyl ketone
- Organic solvent 2: propylene glycol monomethyl ether acetate

### [Preparation of composition for forming colored layer]

Compositions (coating solutions 5 to 9) for forming a colored layer with the compositions listed in Table 2 were prepared. The numerical values in Table 2 shown below each indicate parts by mass of each component with respect to the total mass of each coating solution, and "-" indicates that the corresponding component is not contained.

**[Table 2]**

| (parts by mass) | | | | | |
|---|---|---|---|---|---|
| | Coating solution 5 | Coating solution 6 | Coating solution 7 | Coating solution 8 | Coating solution 9 |
| Red pigment dispersion liquid | 671.1 | - | - | - | 894.8 |
| Blue pigment dispersion liquid | - | 732.6 | - | - | - |
| Yellow pigment dispersion liquid | - | - | 606.5 | - | - |
| Red dye | - | - | - | 108.0 | - |
| Acrylic resin | 133.2 | 182.0 | 176.6 | 417.4 | 48.6 |
| Monomer | 63.3 | 69.4 | 67.9 | 118.3 | 47.8 |
| Polymerization initiator | 0.7 | 0.8 | 0.8 | 1.4 | 0.6 |
| Surfactant | 7.3 | 7.3 | 7.3 | 10.8 | 7.3 |
| Organic solvent 1 | 124.4 | 7.9 | 140.9 | 344.1 | 1.0 |
| Total | 1000.0 | 1000.0 | 1000.0 | 1000.0 | 1000.0 |

The details of each component listed in Table 2 are as follows. Further, the acrylic resin, the monomer, the polymerization initiator, the surfactant, and the organic solvent 1 are the same as the components used for forming the reflective layer as described above.
- Red pigment dispersion liquid 1: SF RED GC1323, manufactured by Sanyo Color Works, Ltd., composition (red pigment: 12.0% by mass, dispersion resin: 5.4% by mass, dispersion assistant: 4.8% by mass, dispersion solvent (propylene glycol monomethyl ether acetate): 73.8% by mass, dispersion solvent (propylene glycol monomethyl ether): 4.0% by mass)
- Blue pigment dispersion liquid: SF BLUE GB1414, manufactured by Sanyo Color Works, Ltd., composition (blue pigment: 10.0% by mass, dispersion resin: 3.5% by mass, dispersion assistant: 3.5% by mass, dispersion solvent (propylene glycol monomethyl ether acetate): 78.0% by mass, dispersion solvent (propylene glycol monomethyl ether): 5.0% by mass)
- Yellow pigment dispersion liquid: SF Yellow GC1827, manufactured by Sanyo Color Works, Ltd., composition (yellow pigment: 12.0% by mass, dispersion resin: 4.2% by mass, dispersion assistant: 4.8% by mass, dispersion solvent (propylene glycol monomethyl ether acetate): 79.0% by mass)
- Red dye: Solvent Red 197 (manufactured by Tokyo Chemical Industry Co., Ltd.)

### <Preparation of decorative film>

### - Preparation of base film -

An ABS film (thickness of 250 µm, manufactured by Okamoto Industries, Inc.) was prepared as the base film.

### - Preparation of protective film -

Next, GF-8 (polyethylene film having a thickness of 35 µm, manufactured by Tamapoly Co., Ltd.) was prepared as the protective film.

### [Formation of colored layer and reflective layer on surface of base film]

One surface of the base film was coated with each coating solution listed in Tables 1 and 2 in an amount set such that the combination and the thickness (the thickness after the solution was dried) listed in Table 3 were obtained using an extrusion coater to form a composition layer for forming a reflective layer and a composition layer for forming a colored layer, and the composition layers were dried to form a reflective layer and a colored layer in this order.

In Example 19 and Example 20, one more layer, in other words, a composition layer for forming a colored layer was formed on the prepared colored layer using the coating solution listed in Table 3, and the composition layer was dried, thereby forming a colored layer having a laminated structure.

Further, the reflective layer and the colored layer sequentially laminated on the base film, and the protective film prepared in the above-described manner was pressure-bonded to the outermost layer, in other words, the surface of the colored layer opposite to a side where the reflective layer was provided.

### (Exposure)

ACRYPRENE HBS010 (acrylic resin having a thickness of 125 µm, manufactured by Mitsubishi Rayon Co., Ltd.) was laminated on the obtained base film having reflective layer and the colored layer from which the protective film had been removed. The lamination was performed by setting the temperature of the acrylic resin film as a transparent film to 90°C, the linear pressure thereof to 100 N/cm, and the transport speed thereof to 0.1 m/min.

Thereafter, the distance between the exposure light source and the acrylic resin film in the base film was set to 200 µm and the entire surface was exposed to the light source with an exposure amount of 150 mJ/cm² (i-line).

Each decorative film of Examples 1 to 20 and Comparative Examples 2 to 4 including the acrylic resin film (transparent film), the colored layer, the reflective layer, and the base film in this order was prepared in the above-described manner.

Further, a decorative film of Example 21 was obtained in the same manner as in Example 7 except that a PET film (COSMO SHINE A4100, manufactured by Toyobo Co., Ltd., thickness of 100 µm) was used in place of the base film used in Example 7 as listed in Table 3.

### [Comparative Example 1]

The same ABS film (thickness of 250 µm, manufactured by Okamoto Industries, Inc.) as the base film in Example 1 was set on a commercially available vapor deposition device ("NS-1875-Z" (product name), manufactured by Nishiyama-Seisakusho Co., Ltd.) to obtain a film having an aluminum vapor deposition layer serving as a metal vapor deposition layer with a thickness of 45 nm. In the present embodiment, the metal vapor deposition layer functions as the reflective layer.

A decorative film of Comparative Example 1 was obtained by performing the treatment subsequent to the formation of the colored layer on the aluminum (reflective layer) surface of the obtained aluminum vapor deposition film in the same manner as in Example 1.

**[Table 3]**

| | Configuration of decorative film | | | | | | | Evaluation of performance | | |
|---|---|---|---|---|---|---|---|---|---|---|
| | Resin of base film | Reflective layer | | Colored layer 1 | | Colored layer 2 | | Tint | | Three-dimensional moldability |
| | | Coating solution | Thickness after drying | Coating solution | Thickness after drying | Coating solution | Thickness after drying | Depth of tint | Glossiness | Limit spherical diameter (mm) |
| Example 1 | ABS | Coating solution 1 | 10 µm | Coating solution 5 | 2 µm | Not available | | C | A | 70 |
| Example 2 | ABS | Coating solution 1 | 10 µm | Coating solution 5 | 4 µm | Not available | | B | A | 60 |
| Example 3 | ABS | Coating solution 1 | 10 µm | Coating solution 5 | 6 µm | Not available | | A | A | 50 |
| Example 4 | ABS | Coating solution 1 | 10 µm | Coating solution 5 | 10 µm | Not available | | A | A | 40 |
| Example 5 | ABS | Coating solution 1 | 10 µm | Coating solution 5 | 15 µm | Not available | | A | A | 40 |
| Example 6 | ABS | Coating solution 1 | 10 µm | Coating solution 5 | 20 µm | Not available | | A | A | 30 |
| Example 7 | ABS | Coating solution 1 | 10 µm | Coating solution 5 | 40 µm | Not available | | A | A | 30 |
| Example 8 | ABS | Coating solution 1 | 10 µm | Coating solution 5 | 50 µm | Not available | | A | A | 30 |
| Example 9 | ABS | Coating solution 1 | 10 µm | Coating solution 5 | 60 µm | Not available | | A | B | 20 |
| Example 10 | ABS | Coating solution 1 | 10 µm | Coating solution 6 | 40 µm | Not available | | A | A | 30 |
| Example 11 | ABS | Coating solution 1 | 10 µm | Coating solution 7 | 40 µm | Not available | | B | A | 30 |
| Example 12 | ABS | Coating solution 1 | 10 µm | Coating solution 8 | 40 µm | Not available | | B | A | 30 |
| Example 13 | ABS | Coating solution 1 | 0.3 µm | Coating solution 5 | 40 µm | Not available | | A | C | 70 |
| Example 14 | ABS | Coating solution 1 | 1.0 µm | Coating solution 5 | 40 µm | Not available | | A | B | 50 |
| Example 15 | ABS | Coating solution 1 | 3.0 µm | Coating solution | 40 µm | Not available | | A | A | 40 |
| Example 16 | ABS | Coating solution 1 | 20 µm | Coating solution 5 | 40 µm | Not available | | A | A | 30 |
| Example 17 | ABS | Coating solution 2 | 10 µm | Coating solution 5 | 40 µm | Not available | | A | A | 40 |
| Example 18 | ABS | Coating solution 3 | 10 µm | Coating solution 5 | 40 µm | Not available | | A | A | 70 |
| Example 19 | ABS | Coating solution 1 | 10 µm | Coating solution 9 | 2 µm | Coating solution 5 | 2 µm | A | A | 70 |
| Example 20 | ABS | Coating solution 1 | 10 µm | Coating solution 5 | 2 µm | Coating solution 9 | 2 µm | B | A | 70 |
| Example 21 | PET | Coating solution 1 | 10 µm | Coating solution 5 | 40 µm | Not available | | A | A | 70 |
| Comparative Example 1 | ABS | (Aluminum vapor deposition layer) | (42 nm) | Coating solution 5 | 40 µm | Not available | | A | D | 90 |
| Comparative Example 2 | ABS | Coating solution 1 | 10 µm | Not available | | Not available | | D | A | 40 |
| Comparative Example 3 | ABS | Not available | | Coating solution 5 | 40 µm | Not available | | D | E | 40 |
| Comparative Example 4 | ABS | Coating solution 4 | 10 µm | Coating solution 5 | 40 µm | Not available | | D | E | 40 |

### <Evaluation>

The obtained decorative films of each example and each comparative example were evaluated as follows. The evaluation results are listed in Table 3.

### [Evaluation of tint and glossiness]

Sensory evaluation was performed on the tint (depth of tint) and the glossiness (visibility of gloss and reflected light) of the decorative films of each example and each comparative example based on the following standards.

Further, in the following evaluation standards, it is preferable that both of the depth of tint and the glossiness were evaluated as A, B, or C, more preferable that both of the depth of tint and the glossiness were evaluated as A or B, and still more preferable that both of the depth of tint and the glossiness were evaluated as A.

### (Depth of tint)

A: There was a depth in color and a deep tint was strongly felt.
B: There was a depth in color and a deep tint was felt.
C: A depth in color and a deep tint were slightly felt.
D: The color of the background was seen to be transparent, and a depth in color was not felt and a deep tint was not observed.

### (Glossiness)

A: Excellent gloss resulting from strong reflection was seen even at the time of being visually recognized at any angle.
B: Gloss resulting from reflection was seen even at the time of being visually recognized at any angle.
C: Gloss resulting from reflection was slightly seen even at the time of being visually recognized at any angle.
D: Excellent gloss resulting from strong reflection was seen in the regular reflection direction with respect to the light source, but gloss resulting from reflection was unlikely to be seen even at the time of being observed at any angle other than the regular reflection direction.
E: Gloss was not seen.

### <Evaluation of three-dimensional moldability>

Hemispherical molds having diameters at intervals of 10 mm between 10 mm and 200 mm were prepared.

Using the molds, the obtained decorative film was vacuum-molded to have a hemispherical shape at a heating temperature of 120°C, and the minimum diameter of the mold having a surface in which cracks occurred was used as an index of the three-dimensional moldability. Further, it is evaluated that the three-dimensional moldability is excellent in a case where cracks do not occur in the surface with a smaller diameter. There is no problem in practical use in a case where the diameter is 70 mm or less, and the diameter is preferably 50 mm or less and more preferably 40 mm or less.

Based on the results listed in Table 3, it was found that all decorative films of the examples have a deep tint and glossiness.

Further, it was found that the three-dimensional moldability is excellent.

Meanwhile, it was found that the intensity of reflection was observed depending on the viewing angle, the texture was poor from the viewpoint of the glossiness, and the three-dimensional moldability was degraded in a case of the decorative film of Comparative Example 1 which has the reflective layer serving as a metal vapor deposition layer.

Further, it was found that a deep tint was not able to be obtained in all of the decorative film of Comparative Example 2 which does not have a colored layer, the decorative film of Comparative Example 3 which does not have a reflective layer, and the decorative film of Comparative Example 4 in which a black layer was used as a reflective layer.

The entirety of the disclosure of JP2016-244935 filed on December 18, 2016 is incorporated in the present specification by reference.

All documents, patent applications, and technical standards described in the present specification are incorporated herein by reference to the same extent as in a case of being specifically and individually noted that individual documents, patent applications, and technical standards are incorporated by reference.

### Explanation of References

10: decorative film
12: base film
14: reflective layer
16: colored layer
18: transparent film
20: molded base material
22: decorative molded body

## Claims

1. A decorative film comprising:
a base film;
a reflective layer which contains metal particles and a resin on one surface of the base film; and
a colored layer which contains a colorant other than the metal particles on a surface of the reflective layer opposite to a side where the base film is provided.

2. The decorative film according to claim 1,
wherein the colorant other than the metal particles includes a pigment.

3. The decorative film according to claim 1 or 2, further comprising:
a transparent film on a surface of the colored layer opposite to a side where the reflective layer is provided.

4. The decorative film according to any one of claims 1 to 3,
wherein the reflective layer is provided on the entire surface on one side of the base film.

5. The decorative film according to any one of claims 1 to 4,
wherein a thickness of the reflective layer is 0.5 µm or greater.

6. The decorative film according to any one of claims 1 to 5,
wherein a thickness of the colored layer is 5 µm or greater.

7. The decorative film according to any one of claims 1 to 6,
wherein the colored layer has a laminated structure including a plurality of layers, and
the plurality of layers included in the colored layer are layers in which at least any of types of the colorants other than the metal particles or contents of the colorants other than the metal particles are different from one another.

8. The decorative film according to any one of claims 1 to 7,
wherein the base film contains 60% by mass or greater of an acrylonitrile/butadiene/styrene copolymer resin with respect to a total amount of the resin contained in the base film.

9. The decorative film according to any one of claims 1 to 8, which is used for insert molding.

10. A decorative molded body comprising:
a molded base material; and
the decorative film according to any one of claims 1 to 9.
